# EUROPÄISCHE PATENTSCHRIFT

(11) **EP 0 851 905 B1**
(45) Veröffentlichungstag und Bekanntmachung des Hinweises auf die Patenterteilung: **02.05.2001**
(21) Anmeldenummer: 96927671.6
(22) Anmeldetag: 02.08.1996
(51) Int. Cl.: C09K 3/32, C02F 1/68, B01J 20/22

(54) **VERFAHREN ZUR HERSTELLUNG EINES AUFNAHMESUBSTRATES**
METHOD OF MANUFACTURING AN ABSORPTION SUBSTRATE
PROCEDE DE FABRICATION D'UN SUBSTRAT D'ABSORPTION

(30) Priorität: 16.08.1995 DE 19530096
(43) Veröffentlichungstag der Anmeldung: 08.07.1998
(73) Patentinhaber: DIBA Dienstleistungs- und Beteiligungs GmbH, 82031 Grünwald (DE)
(72) Erfinder: SOMMER, Hermann, W., D-82031 Grünwald (DE); RESCHKE, Wolfgang, D-84524 Neuötting (DE); SCHWAAB, Rudolf, D-81675 München (DE)
(86) Internationale Anmeldenummer: EP9603426
(87) Internationale Veröffentlichungsnummer: WO9707177

(56) Entgegenhaltungen:
- CH-A- 681 626
- DE-A- 2 338 235
- DE-A- 4 336 273
- US-A- 5 120 767
- DATABASE WPI Week 8215 Derwent Publications Ltd., London, GB; AN 82-29461E XP002018724 & JP,A,57 038 875 (TAIHO) , 3.März 1982

## Beschreibung

Die Erfindung betrifft ein Verfahren zur Herstellung eines Aufnahmesubstrates gemäß Oberbegriff von Anspruch 1.

Derartige Verfahren sind bekannt. Aus der DE-AS 23 38 235 ist es bekannt, daß Gummipartikel bei Benetzung mit Paraffinen, Olefinen, Naphthenen, Aromaten und anderen organischen Flüssigkeiten diese aufnehmen können, wodurch eine Abtrennungsmöglichkeit insbesondere von Oberflächen von Gewässern besteht.

In der DE-40 07 695 C2 ist die oleophile Wirkung eines Gummimulches mit einem Luftanteil von ca. 50 Vol.% beschrieben. Dieser Gummimulch wird als Aufnahmesubstrat in Gewässern eingesetzt.

In DE 195 06 964.1 sind eine Vorrichtung und ein Verfahren zur Erzeugung von Aufnahmesubstraten unter Einsatz von oxidischen Trennmitteln auf Gummiflakes beschrieben, bei welcher bzw. bei welchem dieses Material für den Transport bedeutend komprimiert und bei Gebrauch wieder entspannt werden kann.

Um dem Problem der Sedimentation von Gummimulchpartikeln nach der Aufnahme von Bestandteilen der oben genannten organischen Flüssigkeiten zu begegnen, wurde in der DE 195 09 813.7 vorgeschlagen, eine adsorptive Einarbeitung von Korkpulver auf die Oberflächen der Altgummiflakes vorzusehen.

Die bekannten Aufnahmesubstrate weisen zum einen eine begrenzte Aufnahmekapazität für aus vornehmlich Gewässern abzutrennende organische Stoffe auf, und erfordern darüber hinaus zur Vermeidung einer Sedimentation zusätzliche chemische Stoffe wie z.B. Haftvermittler, damit, wie in der DE 195 09 813.7 angegeben, die Korkbestandteile an der Oberfläche der Altgummipartikel haften bleiben, um so deren Schwimmfähigkeit zu erhalten.

Es ist deshalb die Aufgabe der Erfindung, ein Verfahren zur Herstellung eines Aufnahmesubstrates zu schaffen, mittels welchem die Aufnahmekapazität für organische Substanzen erhöht, eine Sedimentation des Aufnahmesubstrates in einem Gewässer vermieden und ein Einsatz von zusätzlichen chemischen Substanzen eliminiert werden können.

Diese Aufgabe wird durch ein Verfahren mit den Merkmalen gemäß Anspruch 1 gelöst. Zweckmäßige Weiterbildungen sind in den abhängigen Ansprüchen definiert.

Danach wird bei dem Verfahren zur Herstellung eines Aufnahmesubstrates, welches zur Aufnahme von organischen Substanzen, insbesondere von Öl geeignet ist, aus Altreifen und/oder industriellen Gummiresten in einem ersten Verfahrensabschnitt eine Zerkleinerung der Altreifen und/oder der Gummireste zu einem granulatähnlichen Gut realisiert. Zur Erhöhung der Aufnahmekapazität des Aufnahmesubstrates für die erwähnten organischen Substanzen wird das granulatähnliche Gut in einem zweiten Verfahrensschritt zu festen Gummikörpern verpreßt. Durch erneutes Zerkleinern dieses durch Verpressen so hergestellten Gummikörpers mittels eines Schleifvorganges wird ein Gummimulch erzeugt, welcher gegenüber dem granulatähnlichen Gut, auf dessen Basis die Aufnahmesubstrate des Standes der Technik wirken, eine deutlich höhere Aufnahmekapazität aufweist.

Ein besonderer Vorteil des mit dem erfindungsgemäßen Verfahren hergestellten Aufnahmesubstrates besteht darin, daß dieses auf rein physikalischem Wege aus insbesondere Industriegummi hergestellt wird und keinerlei chemische Zusätze enthält. Durch das Schleifen des Gummikörpers zu einem Gummimulch wird die Saugwirkung des Aufnahmesubstrates ähnlich der eines Schwammes. Durch den Schleifvorgang wird nämlich die Oberfläche der Gummiteile des Gummimulches deutlich größer als die bei dem granulatähnlichen Gut. Das hat darüber hinaus den Vorteil, daß bei gleicher Aufnahmekapazität das mit dem Verfahren gemäß der Erfindung hergestellte Aufnahmesubstrat in deutlich geringerer Menge einsetzbar ist.

Bei einem bevorzugten Ausführungsbeispiel wird als zusätzlicher Verfahrensschritt vor dem Verpressen des granulatähnlichen Gutes zu festen Gummikörpern in einem zusätzlichen Verfahrensschritt eine Abscheidung der metallischen Bestandteile durchgeführt. Das ist vor allem dann wichtig, wenn Altreifen als Ausgangsprodukt zur Erzeugung des granulatähnlichen Gutes dienen. Da in Altreifen des weiteren textile Bestandteile bzw. Gewebebestandteile vorhanden sind, wird vorzugsweise in einem weiteren bevorzugten Ausführungsbeispiel eine Abscheidung dieser Bestandteile, und zwar insbesondere durch eine Abscheidung aufgrund der unterschiedlichen Dichte der Gummibestandteile und der Textilbestandteile vorgenommen. Es ist möglich, das granulatähnliche Gut zu festen Gummikörpern unter Zugabe von Lösungsmitteln oder ohne Zugabe von Lösungsmitteln zu verpressen. Wird kein Lösungsmittel beim Verpressen zugeben, so ist zur Erzielung eines Gummikörpers mit für den anschließenden Schleifvorgang ausreichender Konsistenz ein höherer Verpressungsdruck erforderlich. Soll andererseits dieser höhere Verpressungsdruck vermieden werden, z.B. aus verfahrensökonomischen Gründen, so kann das Verpressen bei einem niedrigeren Druck jedoch unter Zugabe von Lösungsmittel zur Erzielung eines Gummikörpers ausreichender Konsistenz realisiert werden.

Bei einem weiteren bevorzugten Ausführungsbeispiel wird das granulatähnliche Gut in einem Mahlvorgang auf eine durchschnittliche Partikelgröße im Bereich von ca. 1 bis 3 mm erzeugt.

Für den Schleifvorgang, welcher sich an den Verfahrensschritt des Kompaktierens des granulatähnlichen Gutes zu festen Gummikörpern anschließt, wird gemäß einem weiteren bevorzugten Ausführungsbeispiel ein Gummimulch erzeugt, dessen Gummiteilchen eine durchschnittliche Größe von ebenfalls 1 bis 3 mm aufweisen. Vorzugsweise entstehen beim Schleifen eingerollte Gummispäne. Durch den Schleifvorgang wird aus dem festen Gummikörper, welcher vorzugsweise eine metallfreie Gummiplatte bzw. ein Gummiband sein kann, wird das Aufnahmesubstrat durch den physikalischen, spanabhebenden Schleifvorgang quasi herausgeschält. Dabei entsteht ein sich einrollender Span. Der auf diese Weise hergestellte Gummimulch weist deshalb eine wesentlich höhere innere Oberfläche auf als das beim Mahlen entstehende granulatähnliche Gut. Damit wird die Aufnahmekapazität bzw. Bindewirkung für Öl und andere organische Flüssigkeiten gegenüber der für granulatähnliches Gut, wie es aus dem Stand der Technik bekannt ist, fast verdoppelt.

Das mit dem Verfahren gemäß der Erfindung hergestellte Aufnahmesubstrat wird auf die Oberfläche eines abzureinigenden Gewässers in ausreichender Menge aufgestreut und nach kurzer Verweilzeit unter Aufnahme der abzureinigenden organischen Flüssigkeit von der Oberfläche wieder entfernt. Das Aufnahmesubstrat bindet sofort und läßt eine Verflüchtigung der aufgenommenen Substanz nicht zu. Beim Aufstreuen des Aufnahmesubstrates auf Wasserflächen bilden sich aus dem ölgebundenen Gummimulch schwimmfähige Kugeln, deren Entfernung von der Wasseroberfläche und spätere Entsorgung ohne weiteres mit an sich bekannten Techniken möglich ist. Das Öl-Gummi-Adsorbat wird durch Wasser nicht ausgespült. Zweckmäßige Entsorgungsmöglichkeiten bestehen, bedingt durch den relativ hohen Heizwert des Aufnahmesubstrates, in einer thermischen Verwertung z.B. der Pyrolyse oder der Verbrennung.

Wegen der kostengünstigen Herstellung und der hohen Aufnahmekapazität des Aufnahmesubstrates, welches mit dem Verfahren gemäß der Erfindung hergestellt wurde, kann dieses Aufnahmesubstrat bereits vorbeugend dort eingebracht werden, wo unter Umständen mit einer Ölverschmutzung zu rechnen ist. Das kann z.B. bei in Böden eingelassenen Öltanks oder unter bestimmten Maschinen der Fall sein.

Wenn Heizöl, Diesel oder Hydrauliköl abgereinigt werden soll, so beträgt die Bindezeit nur einige Sekunden. Selbst bei Druckeinwirkkung von bis zu 1 MPa wird das gebundene Öl nicht wieder freigegeben.

Vor allem bei der Nutzung des mit dem Verfahren gemäß der Erfindung hergestellten Aufnahmesubstrates zur Ölentsorgung von Wasserflächen spielt die thermische Verwertung eine große Rolle, da die spezifische Energie in diesem Fall bei ca. 28.000 kJ/kg liegt. Dadurch ergibt sich neben den Vorteilen für eine saubere Umwelt die Einsparung an Primärenergieträgern. Wegen der Schwierigkeit des Wiederaustreibens des durch das Aufnahmesubstrat aufgenommen Öles sind die Entsorgungskosten inklusive Transport erheblich günstiger als bei vergleichbaren bekannten Mitteln.

Eine durch Siebanalyse durchgeführte Korngrößenanalyse des durch Schleifen hergestellten Gummimulches ergab beispielsweise ca. 25 Gew.% im Bereich von 1 bis 2 mm Korngröße, ca. 49 Gew.% im Bereich von 2 bis 3 mm Korngröße und ca. 14 Gew.% im Bereich von 3 bis 4 mm Korngröße. Auf dieser Basis ergibt sich ein Schüttgewicht des mit dem erfindungsgemäßen Verfahren hergestellten Aufnahmesubstrates von vorzugsweise ca. 220 g/l.

Die mit dem erfindungsgemäßen Verfahren hergestellten Aufnahmesubstrate können sowohl für Böden und Verkehrsflächen, aus denen bzw. von denen Ölrückstände abzureinigen sind, sowie für Seen, Gewässer und Wasseroberflächen angewendet werden.

## Patentansprüche

1. Verfahren zur Herstellung eines Aufnahmesubstrates, insbesondere für Öl, aus Altreifen und/oder Gummiresten, bei welchem die Altreifen und/oder die Gummireste zu granulatähnlichem Gut zerkleinert werden,
**dadadurch gekennzeichnet,** daß
- das granulatähnliche Gut zu festen Gummikörpern verpreßt wird; und anschließend
- der Gummikörper zu einem Gummimulch geschliffen wird.

2. Verfahren nach Anspruch 1, bei welchem metallische Bestandteile insbesondere durch Magnetabscheidung vor dem Verpressen aus dem granulatähnlichem Gut entfernt werden.

3. Verfahren nach Anspruch 1 oder 2, bei welchem textile Bestandteile, insbesondere durch Gewichtsabscheidung, vor dem Verpressen aus dem granulatähnlichen Gut entfernt werden.

4. Verfahren nach einem der Ansprüche 1 bis 3, bei welchem das Verpressen ohne Zugabe von Lösungsmittel erfolgt.

5. Verfahren nach einem der Ansprüche 1 bis 3, bei welchem das Verpressen mit Zugabe von Lösungsmittel erfolgt.

6. Verfahren nach einem der Ansprüche 1 bis 5, bei welchem ein granulatähnliches Gut mit einer durchschnittlichen Größe von 1 bis 3 mm erzeugt wird.

7. Verfahren nach einem der Ansprüche 1 bis 6, bei welchem der Gummikörper zu einem Gummimulch mit einer durchschnittlichen Korngröße von 1 bis 3 mm geschliffen wird.

8. Verfahren nach Anspruch 1 oder 7, bei welchem beim Schleifen eingerollte Gummispäne erzeugt werden.

## Claims

1. Process to produce an absorbent substratum, in particular for oil, made from scrap-rubber tyres and/or rubber waste, by which the scrap tyres and/or rubber waste are comminuted to a substance similar to granules,
**hereby having the distinguishing features** that
- the substance similar to granules is pressed to a solid rubber body and subsequently
- the rubber body is ground to a rubber mulch.

2. Procedure in accordance with claim 1, in which metal components are removed from the substance similar to granules before pressing, in particular by magnetic separation.

3. Procedure in accordance with claims 1 or 2, in which textile components are removed from the substance similar to granules before pressing, in particular by weight separation.

4. Procedure in accordance with claims 1 to 3 in which the pressing occurs without addition of solution agents.

5. Procedure in accordance with claims 1 to 3 in which the pressing occurs with the addition of solution agents.

6. Procedure in accordance with one of the claims 1 to 5 in which a substance similar to granules is created with an average size of 1 to 3 mm.

7. Procedure in accordance with one of the claims 1 to 6 in which rubber bodies are ground to a rubber mulch with an average particle size of 1 to 3 mm.

8. Procedure in accordance with claims 1 or 7 in which rolled-up rubber chippings (shavings) are created when ground.

## Revendications

1. Procédé pour la fabrication d'un substrat d'absorption en particulier d'huile, à base de pneumatiques usagés et / ou de restes de caoutchouc, au moyen duquel les pneumatiques usagés et / ou restes de caoutchouc sont broyés et transformés en granulés,
caractérisé en ce que
- les granulés sont compactés en pièces de caoutchouc solides ; et ensuite
- la pièce de caoutchouc est meulée en paillis de caoutchouc.

2. Procédé selon la revendication 1, au moyen duquel les composantes métalliques sont extraites des granulés avant la compression, en particulier par une séparation magnétique.

3. Procédé selon la revendication 1 ou 2, au moyen duquel les composantes textiles sont extraites des granulés avant la compression, en particulier par une séparation par le poids.

4. Procédé selon l'une des revendications 1 à 3, au moyen duquel la compression est effectuée sans ajout de solvants.

5. Procédé selon l'une des revendications 1 à 3, au moyen duquel la compression est effectuée avec ajout de solvants.

6. Procédé selon l'une des revendications 1 à 5, au moyen duquel des granulés d'une taille moyenne de grain de 1 à 3 mm sont produits.

7. Procédé selon l'une des revendications 1 à 6, au moyen duquel la pièce en caoutchouc est meulée en paillis de caoutchouc avec une taille moyenne de grain de 1 à 3 mm

8. Procédé selon l'une des revendications 1 à 7, au moyen duquel des copeaux de caoutchouc enroulés sont produits lors du meulage.
